(19) Europäisches Patentamt

European Patent Office

Office européen des brevets

(11) **EP 0 716 362 B1**

(12) **EUROPÄISCHE PATENTSCHRIFT**

(45) Veröffentlichungstag und Bekanntmachung des Hinweises auf die Patenterteilung:
**19.09.2001   Patentblatt 2001/38**

(51) Int Cl.⁷: **G05B 19/4061**, G05B 19/19

(21) Anmeldenummer: **95118593.3**

(22) Anmeldetag: **25.11.1995**

(54) **Verfahren und Einrichtung zum Überwachen der Bewegung eines Maschinenbauteils**

Method and device for monitoring the movement of a machine part

Méthode et dispositif de surveillance du déplacement d'une partie d'une machine-outil

(84) Benannte Vertragsstaaten:
**CH DE FR IT LI**

(30) Priorität: **08.12.1994   DE 4443669**

(43) Veröffentlichungstag der Anmeldung:
**12.06.1996   Patentblatt 1996/24**

(73) Patentinhaber: **INDEX-WERKE GMBH & CO. KG HAHN & TESSKY
73730 Esslingen (DE)**

(72) Erfinder: **Gnann, Alfred
D-73207 Plochingen (DE)**

(74) Vertreter: **Hoeger, Stellrecht & Partner
Uhlandstrasse 14 c
70182 Stuttgart (DE)**

(56) Entgegenhaltungen:
**EP-A- 0 334 044          DE-A- 2 740 793
DE-A- 4 310 945          US-A- 4 644 237
US-A- 5 247 608**

## Beschreibung

Verfahren und Einrichtungen zum Überwachen der Bewegung mindestens eines ersten, durch einen Antrieb längs einer vorgegebenen Bahn bewegten Maschinenbauteils zur Vermeidung eines Überfahrens einer bezüglich eines zweiten Maschinenbauteils zulässigen Endposition sind in unterschiedlicher Ausgestaltung bekannt, und zwar auch als Verfahren und Einrichtungen zum Verhindern von Kollisionen zwischen zwei Maschinenbauteilen, von denen mindestens ein erstes mittels eines Antriebs längs einer geraden Bahn relativ zum zweiten Maschinenbauteil derart verfahrbar ist, daß die beiden Bauteile kollidieren können.

Typisch für die vorstehend erwähnten Kollisionsprobleme sind auf einer gemeinsamen Führungsbahn angeordnete und längs dieser Führungsbahn verfahrbare Maschinenschlitten bzw. Schlitten mit darauf angeordneten Baugruppen (Schlitteneinheiten) von Werkzeugmaschinen, Industrierobotern und dergleichen, wenn sich die grundsätzlich möglichen Bewegungsbereiche der Schlitten bzw. Schlitteneinheiten überlappen; für den Betrieb beispielsweise einer Werkzeugmaschine müssen aber häufig auch Kollisionsbetrachtungen für einen mit einem Werkzeugträger versehenen Maschinenschlitten bezüglich fester Maschinenbauteile wie beispielsweise des Spindelkastens einer Drehmaschine angestellt werden. Kollisionen zwischen zwei Maschinenschlitten bzw. den von diesen getragenen Bauteilen oder einer Schlitteneinheit und einem festen Maschinenbauteil können beträchtliche Schäden am Schlittensystem und/oder an dem festen Maschinenbauteil verursachen, insbesondere dann, wenn der Schlitten bzw. die Schlitten längs seiner bzw. ihrer Bahn mit hoher Geschwindigkeit verfahren wird bzw. werden, so wie dies z. B. bei einem Werkzeugträger-Schlitten immer dann der Fall ist, wenn er, ohne daß sein Werkzeug arbeitet, verfahren wird (Fahren im sogenannten Eilgang).

Der Gefahr solcher Kollisionen wird bisher einerseits durch geeignete mechanische Schutzmaßnahmen an der Maschine selbst, andererseits durch eine elektrische/elektronische Überwachung der Bewegungen der Maschinenbauteile in der Maschinensteuerung begegnet.

Mechanische Schutzmaßnahmen dienen dem passiven Maschinenschutz; z. B. schützen elastische Puffer an den kritischen Aufprallorten die Einzelteile der Maschine, und durch eine Rutschkupplung zwischen einem verfahrbaren Maschinenbauteil und seinem Antrieb wird verhindert, daß die bei einer Kollision auftretenden Kräfte zeitlich unbegrenzt wirken, wobei eine solche Rutschkupplung bei Einsatz eines modernen Überwachungssystems auch die Möglichkeit eröffnet, eine Kollision zu erkennen. In manchen Fällen lassen sich die Bewegungsbereiche verfahrbarer Maschinenbauteile durch konstruktive Maßnahmen so einschränken, daß durch Kollisionen bewirkte Schäden gering gehalten werden; vor allem aber dann, wenn mehrere Schlitteneinheiten auf einer gemeinsamen Führungsbahn angeordnet sind und sich überlappende Bewegungsbereiche aufweisen, kann das Kollisionsproblem durch mechanische Maßnahmen weder verhindert, noch entschärft werden.

Im Falle zweier auf einer gemeinsamen Führungsbahn angeordneter Schlitteneinheiten schalten elektrische bzw. elektronische Überwachungssysteme den Vorschubantrieb einer jeden Schlitteneinheit ab, z. B. unter Zuhilfenahme von berührungslos arbeitenden Näherungsschaltern, wenn der Sicherheitsabstand zwischen den beiden Schlitteneinheiten unterschritten wird. Durch diese Vorgehensweise werden jedoch die Bewegungsbereiche der beiden Schlitteneinheiten in Richtung ihrer gegenseitigen Annäherung mehr oder minder stark eingeengt, und zwar um so mehr, je größer die maximalen Bahngeschwindigkeiten der beiden Schlitteneinheiten sind, da in einem solchen Fall das Überwachungssystem bereits ansprechen muß, wenn der Abstand der beiden Schlitteneinheiten voneinander der Summe der maximal erforderlichen Bremswege (bei maximalen Bahngeschwindigkeiten) der beiden Schlitteneinheiten entspricht. Die wesentlich kürzeren Bremswege, die z. B. dann ausreichen, wenn die Schlitteneinheiten zum Arbeiten bzw. zum Bearbeiten eines Werkstücks langsamer, nämlich mit sogenannter Vorschubgeschwindigkeit bewegt werden, finden ebensowenig Berücksichtigung, wie der Fall, daß eine der beiden Schlitteneinheiten gar nicht bewegt wird und infolgedessen auch nicht bis zum Stillstand abgebremst werden muß.

Typisch für solche Überwachungssysteme ist die sich aus der US-A-4 644 237 ergebende Einrichtung, welche Kollisionen zwischen zwei, längs einer gemeinsamen, geradlinigen Bahn bewegbaren Armen eines Roboters vermeiden soll. Zu diesem Zweck ist an einem ersten Arm eine abgestufte, sich in Richtung der Bahn auf den zweiten Arm zu erstreckende Leiste befestigt, welche eine Maske für drei Lichtschranken einer die Leiste abtastenden und am zweiten Arm befestigten Sensorvorrichtung bildet. Die Leiste ist so abgestuft, daß sie einen schmalen vorderen, der Sensorvorrichtung zugewandten Endbereich besitzt, hinter dem sich die Leistenbreite infolge einer ersten Stufe vergrößert, auf die im Längsabstand eine zweite Stufe folgt, an die sich ein breiter hinterer Endbereich der Leiste anschließt. In der Sensorvorrichtung sind die drei Lichtschranken so angeordnet, daß bei Annäherung der Leiste an die Sensorvorrichtung deren erste Lichtschranke von einer ersten, von der Vorderkante der Leiste gebildeten Flanke überfahren wird, worauf die zweite Lichtschranke von einer zweiten, von der ersten Stufe gebildeten Flanke und schließlich die dritte Lichtschranke von einer dritten, von der zweiten Stufe gebildeten Flanke der Leiste überfahren wird. Da, wie bereits erwähnt, die Leiste eine Maske für die drei Lichtschranken bildet, ist nach dem Überfahren der ersten Lichtschranke durch die erste Flanke zunächst nur die erste Lichtschranke unterbrochen, nach dem Überfahren der zweiten Lichtschranke durch die zweite Flanke sind die erste und die zweite Lichtschranke unterbrochen, und nach dem Überfahren der dritten Lichtschranke durch die dritte Flanke sind alle drei Lichtschranken unterbrochen. Im Zuge der Annäherung der Leiste an die Sensorvorrichtung erzeugt diese also nacheinander drei anhaltende "Unterbrechungssignale" unterschiedlicher Länge. Die in Bahnrichtung gemessenen Abstände der drei Flanken voneinander sind unterschiedlich - der Abstand der ersten und der zweiten Flanke voneinander soll ungefähr 5 cm betragen, der Abstand zwischen der zweiten und der dritten Flanke ungefähr 1,9 cm. Die Funktion der bekannten Einrichtung ist die folgende: Tritt der vordere Endbereich der Leiste in den Bereich der ersten Lichtschranke ein, wird ein erstes Signal erzeugt, durch welches die Relativgeschwindigkeit zwischen den beiden Roboterarmen vermindert wird; durchquert die von der ersten Stufe gebildete Flanke die zweite Lichtschranke, wird ein zweites Signal erzeugt, bei dessen Auftreten die Relativgeschwindigkeit weiter vermindert wird, und schließlich führt ein Unterbrechen der dritten Lichtschranke durch die dritte Flanke zur Erzeugung eines dritten Signals, bei dessen Auftreten der Armantrieb abgeschaltet wird. Bei der bekannten Einrichtung nach der US-A-4 644 237 werden also die drei Signale völlig unabhängig von der Größe der Relativgeschwindigkeit der beiden Roboterarme zueinander bei Erreichen fest vorgegebener Armabstände erzeugt, d. h. kürzere Bremswege, wie sie für relativ kleine Geschwindigkeiten oder dann ausreichen, wenn sich einer der beiden Arme gar nicht bewegt, kann auch diese bekannte Einrichtung nicht berücksichtigen.

Abhilfe schaffen Überwachungsverfahren, welche mittels einer entsprechenden Steuerungssoftware für die Maschinensteuerung realisiert werden. Diese Überwachungsverfahren bedingen in der Regel nicht nur ein maschineneigenes Wegmeßsystem für jede Schlitteneinheit, sondern einen erheblichen Aufwand an Softwareentwicklung sowie viel Rechnerleistung während des Maschinenbetriebs, da bei diesen Überwachungsverfahren mit Hilfe der Wegmeßsysteme andauernd für jede Schlitteneinheit Lage- und Geschwindigkeitsanalysen und darauf aufbauend für die beiden Schlitteneinheiten Abstandsanalysen angestellt werden, um den Antrieb einer Schlitteneinheit bzw. die Antriebe beider Schlitteneinheiten abzuschalten, wenn ein von der Relativgeschwindigkeit abhängiger Sicherheitsabstand unterschritten wird. Außerdem kann bei diesen Überwachungsverfahren mit der Überwachung erst nach einem Synchronisierungszyklus des aus Maschine und Steuerung bestehenden Gesamtsystems begonnen werden.

Bei Maschinen und insbesondere bei Werkzeugmaschinen muß die Bewegung eines durch einen Antrieb längs einer Bahn bewegten Maschinenbauteils aber oft auch aus anderen als Kollisionsgefahrgründen überwacht werden, um Beschädigungen zu vermeiden; so ist beispielsweise ein solches Maschinenbauteil oft über eine oder mehrere Leitungen mit stationären Teilen der Maschine verbunden, um Steuersignale oder Energie zu übertragen, beispielsweise zu einem von dem bewegten Maschinenbauteil getragenen angetriebenen Werkzeug, einem weiterzuschaltenden und hinsichtlich seiner Schaltposition zu überwachenden Werkzeugrevolver oder einem Meßelement bzw. Sensor zur Vermessung eines Werkstücks oder eines Werkzeugs. Versagt die herkömmliche Überwachung der Bewegung des angetriebenen Maschinenbauteils und bewegt sich dieses über eine zulässige Endposition hinaus, können solche Leitungen beschädigt oder gar zerstört werden. Ein hierfür typischer Fall ist ein Mehrspindel-Drehautomat mit einer um eine Schaltachse schrittweise rotatorisch weiterschaltbaren Werkstückspindel-Trommel, deren Werkstückspindeln nicht nur angetrieben und stillgesetzt werden müssen, sondern auch über Werkstück-Spannvorrichtungen verfügen, welche zu schließen und zu öffnen sind. Werden Steuersignale und Energie nicht über Schleifkontakte oder dergleichen übertragen, welche es erlauben, die Werkstückspindel-Trommel immer im selben Drehsinne weiterzuschalten und damit auch über einen Drehwinkel von mehr als 360° zu drehen, muß man die Werkstückspindel-Trommel mit stationären Maschinenteilen über Leitungen verbinden, welche nur einen begrenzten Drehwinkel für die Werkstückspindel-Trommel zulassen. In diesem Falle wird die letztere so hin- und hergeschaltet, wie es sich beispielsweise aus der EP-B-0 043 584 ergibt; hat dann die Werkstückspindel-Trommel z. B. sechs äquidistant angeordnete Werkstückspindeln und infolgedessen sechs Schaltpositionen, zwischen denen jeweils ein Drehwinkel von 60° liegt, wird die Werkstückspindel-Trommel fünfmal jeweils um einen Drehwinkel von 60° weitergeschaltet und dann in einem Schritt um 300° zurückgedreht. Bei einem Fehler im Schaltantrieb oder in dessen Steuerung kann dann aber der Fall auftreten, daß die Werkstückspindel-Trommel die fünfte Schaltstellung mit voller Schaltgeschwindigkeit ungebremst überfährt und infolgedessen schon aufgrund ihrer erheblichen Masse nach einer Drehung über insgesamt 360° nicht mehr so rechtzeitig angehalten werden kann, daß sich Beschädigungen der erwähnten Leitungen vermeiden lassen - die letzteren bilden typischerweise eine Spirale, welche eine Drehung über insgesamt 300° zuläßt, beim Weiterdrehen der Werkstückspindel-Trommel jedoch unter Umständen so verformt wird, daß sie beim Zurückdrehen der Werkstückspindel-Trommel nicht mehr ihre alte Form einnimmt.

Während also im Falle des Vermeidens von Kollisionen zwischen zwei Maschinenbauteilen als Endposition im Sinne des vorstehenden, einleitenden Absatzes diejenige Position des angetriebenen Maschinenbauteils relativ zum anderen Bauteil zu gelten hat, welche das angetriebene Maschinenbauteil entweder gar nicht oder zumindest nicht ungebremst überfahren darf, soll eine Kollision zwischen den beiden Maschinenbauteilen verhindert werden, ist im Falle des vorstehend beschriebenen Mehrspindel-Drehautomaten unter dieser Endposition die letzte zulässige Schaltposition oder diejenige Drehwinkelstellung der Werkstückspindel-Trommel zu verstehen, welche durch die Trommel nicht ungebremst überfahren werden darf, um Leitungsbeschädigungen zu vermeiden. Natürlich erstreckt sich die Erfindung aber auch auf solche Fälle, bei denen die betrachteten Maschinenbauteile beide bewegt werden, und in diesem Fall ist unter der Endposition nicht eine räumlich feste Position zu verstehen, sondern eine Position des einen Maschinenbauteils relativ zum anderen Maschinenbauteil.

Der Erfindung lag die Aufgabe zugrunde, ein Verfahren bzw. eine Einrichtung mit den Merkmalen des Oberbegriffs des Anspruchs 1 bzw. des Anspruchs 4, welche sich aus der US-A-4 644 237 ergeben, zu schaffen, durch das bzw. die der Bewegungsbereich des angetriebenen Maschinenbauteils bzw. die Bewegungsbereiche der Maschinenbauteile nicht oder nur so wenig eingeschränkt wird bzw. werden, wie dies aufgrund der aktuellen Betriebssituation unabdingbar ist.

Erfindungsgemäß wird diese Aufgabe mit den Merkmalen des Kennzeichens des Anspruchs 1 bzw. des Anspruchs 4 gelöst.

Bei Anwendung der Erfindung könnte der Antrieb sofort gestoppt oder zunächst auch nur verlangsamt werden, die Erfindung erlaubt es aber auch, die Antriebsrichtung umzukehren. Handelt es sich bei einem der beiden Maschinenbauteile um ein festes Bauteil, so kann die diesem zugeordnete Signalerzeugungsvorrichtung natürlich auch an jedem anderen festen Maschinenbauteil vorgesehen sein, z. B. an einem Maschinengestell. Bei den Signalerzeugungsvorrichtungen könnte es sich beispielsweise um auf der Basis der Ermittlung der Laufzeiten optischer Signale arbeitende elektro-optische Signalerzeugungsvorrichtungen handeln, wozu es dann an einem der beiden Maschinenbauteile nur eines Signalreflektors bedürfte und die andere Signalerzeugungsvorrichtung von letzterer ausgesandte optische Impulse in Abhängigkeit von der Laufzeit dieser bzw. der reflektierten Impulse in elektrische Impulse unterschiedlichen Abstandes und/oder unterschiedlicher Länge und/oder unterschiedlicher Höhe umsetzt. Wie sich aus dem Folgenden noch ergeben wird, läßt sich das erfindungsgemäße Verfahren aber auch mit einfacheren Mitteln verwirklichen.

Da aus der bei dem erfindungsgemäßen Verfahren erzeugten Impulsfolge nicht nur auf den Abstand des angetriebenen Maschinenbauteils von der zulässigen Endposition bzw. auf den Abstand der beiden Maschinenbauteile voneinander geschlossen werden kann, sondern auch auf die Relativgeschwindigkeit, mit der sich das angetriebene Maschinenbauteil der Endposition nähert bzw. mit der sich die beiden Maschinenbauteile einander annähern, lassen sich so die zuvor erwähnten Unzulänglichkeiten nicht nur der bekannten mechanischen Schutzmaßnahmen, sondern auch der bekannten elektrischen Überwachungssysteme vermeiden.

Aus dem Vorstehenden ergibt sich, daß das erfindungsgemäße Verfahren ohne Einbuße irgendeines Vorteils so gestaltet werden kann, daß die Impulsfolge erst erzeugt wird, wenn ein vorgegebener Abstand des angetriebenen Maschinenbauteils von der Endposition bzw. der beiden Maschinenbauteile voneinander unterschritten wird, da bei einem größeren Abstand Maßnahmen zur Verhinderung von Beschädigungen nicht erforderlich sind.

Wie sich aus dem Vorstehenden ergibt, kann es sich bei der Bahn, längs der wenigstens eines der Maschinenbauteile bewegt wird, um eine gerade Bahn, aber auch um eine Kreisbahn oder um jede andere definierte Kurvenbahn handeln. Es wurde auch schon darauf hingewiesen, daß es sich bei besagter Endposition nicht um eine feste Position handeln muß, da diese Endposition z. B. im Falle zweier längs einer gemeinsamen Bahn bewegten Maschinenbauteile vom Abstand der beiden Bauteile voneinander und von deren Geschwindigkeiten, mit denen sich die beiden Bauteile aufeinander zubewegen, abhängt. Wenn schließlich im Zusammenhang mit der erfindungsgemäßen Einrichtung vorstehend davon die Rede war, daß die Markierungsreihe und der Sensor der Endposition bzw. dem ersten Bauteil fest zugeordnet sind, so darf dies nicht nur im Sinne von räumlich fest verstanden werden, da sich die Markierungsreihe und/oder der Sensor auch zusammen mit dem einen oder dem anderen Maschinenbauteil bewegen können.

Nachdem die Erfindung ihre größte Bedeutung im Zusammenhang mit der Vermeidung von Kollisionen zwischen zwei Maschinenbauteilen haben dürfte, werden die folgenden Ausführungen auf diesen Fall beschränkt.

Bei einer für diesen Fall besonders günstigen Ausführungsform der erfindungsgemäßen Einrichtung ist das eine Maschinenbauteil mit dem Träger und das andere Maschinenbauteil mit dem Sensor versehen, und die Einrichtung ist derart gestaltet, daß der Antrieb bei Erreichen eines bezüglich der Relativgeschwindigkeit der beiden Maschinenbauteile zueinander kollisionskritischen Abstandes zwischen den beiden Bauteilen abschaltbar ist.

Wie vorstehend erwähnt, könnte die Impulshöhe in Abhängigkeit vom Bauteileabstand moduliert werden, indem z. B. mit Markierungen unterschiedlicher "Intensität" und einem entsprechenden Sensor gearbeitet wird, so z. B. mit Markierungen unterschiedlichen Reflexionsvermögens und einem als Transponder ausgebildeten optischen Sensor. Die erfindungsgemäße Einrichtung wird aber einfacher und billiger, wenn die Markierungsreihe so gestaltet wird, daß die Abstände zwischen aufeinanderfolgenden Markierungen in Richtung einer Verkleinerung des Abstandes der beiden Bauteile voneinander kleiner werden und/oder die in Bahnrichtung gemessene Länge der Markierungen in Richtung einer Verkleinerung des Abstandes der beiden Bauteile voneinander kleiner wird, denn dann kann z. B. mit einem im Maschinenbau weit verbreiteten berührungslos arbeitenden Sensor in Form eines induktiven oder kapazitiven Näherungsschalters gearbeitet werden, welcher metallische Markierungen berührungslos und mit großer Funktionssicherheit abtasten kann, wobei im Falle einer Variation der Abstände z. B. der vorderen Flanken der Markierungen nur jeweils diese Flanken der Markierungen erfaßt werden müssen.

Wie bereits erwähnt, bringt die vorliegende Erfindung die größten Vorteile bei Einrichtungen mit sich, bei denen beide Bauteile als durch gesonderte Antriebe auf einer gemeinsamen Führung verfahrbare Schlitten ausgebildet sind, und ein besonders günstiges Anwendungsgebiet der Erfindung sind Einrichtungen, bei denen die beiden Bauteile Werkzeugträger-Schlitten einer Werkzeugmaschine, insbesondere eines Drehautomaten, sind.

Mit geringstmöglichem Steuerungsaufwand und großer Funktionssicherheit läßt sich die Erfindung mit einer Einrichtung realisieren, welche eine Auswerteschaltung für die Impulsfolge aufweist, durch die der Antrieb abschaltbar ist, wenn nach Erfassung eines Impulses durch die Auswerteschaltung innerhalb eines vorgegebenen Zeitintervalls die Auswerteschaltung einen weiteren Impuls erfaßt bzw. wenn die Dauer eines von der Auswerteschaltung erfaßten Impulses kürzer ist als eine vorgegebene Zeitdauer.

Gerade weil ein angetriebenes Maschinenbauteil eine zulässige Endposition unter Umständen deshalb überfahren würde, weil ein Fehler in der Maschinensteuerung vorliegt, also z. B. in der CNC-Steuerung einer automatisch arbeitenden Werkzeugmaschine, werden Ausführungsformen der erfindungsgemäßen Einrichtung bevorzugt, bei denen für die Bewegungsüberwachung und gegebenenfalls die Notbremsung des angetriebenen Maschinenbauteils eine von der eigentlichen Maschinensteuerung getrennte Antriebsüberwachungssteuerung vorgesehen ist; diese würde dann gegebenenfalls auch die vorstehend erwähnte Auswerteschaltung enthalten. Durch diese Maßnahme wird zwar der bauliche Aufwand erhöht, dies läßt sich aber in all denjenigen Fällen rechtfertigen, in denen Defekte in der eigentlichen Maschinensteuerung oder z. B. in Antriebsverstärkern zu großen Sachschäden führen können, wie dies z. B. bei einem Mehrspindel-Drehautomaten der Fall ist.

Weitere Merkmale, Vorteile und Einzelheiten der Erfindung ergeben sich aus der nachfolgenden Beschreibung sowie der beigefügten zeichnerischen Darstellung einer besonders vorteilhaften Ausführungsform der erfindungsgemäßen Einrichtung bzw. des erfindungsgemäßen Verfahrens, welche speziell zum Verhindern von Kollisionen zwischen zwei Maschinenbauteilen ausgestaltet sind, wobei es sich bei den beiden Schlitteneinheiten dieser Ausführungsform nur beispielhaft um Werkzeugträger-Schlitteneinheiten eines Drehautomaten handelt; in der Zeichnung zeigen:

Fig. 1 eine schematische Darstellung der erfindungsgemäßen Einrichtung bei der bevorzugten Anwendung der Erfindung auf eine Drehmaschine, und zwar zusammen mit den für das Verständnis der Erfindung wesentlichen Teilen der als CNC-Drehautomat ausgebildeten Drehmaschine;

Fig. 2 ein Ablaufschema (Flußdiagramm) für das von der Steuerung des Drehautomaten durchgeführte erfindungsgemäße Verfahren für den Fall, daß die Dauer der Impulse der erfindungsgemäß erzeugten Impulsfolge gleich demjenigen Zeitintervall ist, während dessen der Sensor sich längs eines der Nokken bewegt, welche die Markierungen bilden;

Fig. 3 eine Darstellung der Impulsfolge bei einer modifizierten Ausführungsform des erfindungsgemäßen Verfahrens, bei der die Impulse der Impulsfolge nur durch die in Verfahrrichtung jeweils vorderen Flanken der Nokken erzeugt werden, und zwar für den Fall, daß sich die beiden Maschinenbauteile einander nähern, und

Fig. 4 eine Darstellung der Impulsfrequenz für diese modifizierte Ausführungsform, und zwar als Funktion des Abstandes der beiden Maschinenbauteile voneinander bei konstanter Annäherungsgeschwindigkeit.

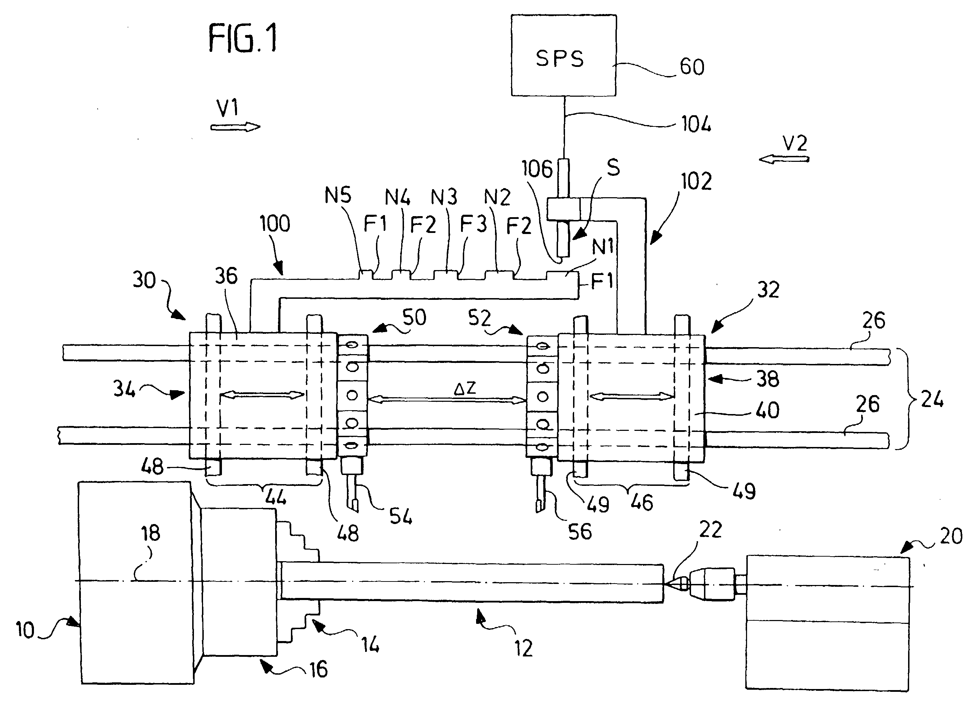

Die Fig. 1 zeigt von einem CNC-Drehautomaten einen Spindelkasten 10, in dem eine ein zu bearbeitendes, wellenförmiges Werkstück 12 mittels einer Spannvorrichtung 14 haltende Arbeitsspindel 16 um eine Spindelachse 18 drehbar gelagert ist und mittels eines nicht dargestellten Antriebs um diese Spindelachse in Drehung versetzt werden kann. Ferner zeigt die Fig. 1 einen dem Spindelkasten 10 gegenüberliegenden sogenannten Reitstock 20 des Drehautomaten, welcher mit einer zur Spindelachse 18 konzentrischen Spitze 22 versehen ist, um das wellenförmige Werkstück 12 an seinem freien Ende bezüglich der Spindelachse 18 zu zentrieren.

Auf einem nicht dargestellten Maschinenbett des Drehautomaten besitzt letzterer eine sogenannte Z-Führung 24 mit zwei Führungsleisten 26, die zueinander parallel und parallel zur Spindelachse 18 verlaufen - die Spindelachse 18 definiert die Richtung der sogenannten Z-Achse. Die Z-Führung 24 ist zwei Kreuzschlittensystemen gemeinsam, nämlich einem ersten Kreuzschlittensystem 30 und einem zweiten Kreuzschlittensystem 32, welche beide in bekannter Weise ausgebildet sind und deshalb nicht im einzelnen dargestellt wurden. Jedes dieser beiden Kreuzschlittensysteme umfaßt in bekannter Weise einen Unterschlitten und einen Oberschlitten, die sich in der in Fig. 1 dargestellten Situation in Richtung senkrecht zur Zeichnungsebene der Fig. 1 übereinander befinden, so daß bei in der Draufsicht gleichen Außenabmessungen der beiden Schlitten der Oberschlitten den Unterschlitten verdeckt. Der Unterschlitten des ersten Kreuzschlittensystems 30 wurde in Fig. 1 mit 34 bezeichnet, der Oberschlitten mit 36, der Unterschlitten des zweiten Kreuzschlittensystems 32 mit 38 und der Oberschlitten mit 40. Die beiden Unterschlitten 34 und 38, bei denen es sich also bei der dargestellten Ausführungsform um die sogenannten Bettschlitten handelt, sind beide an den den beiden Kreuzschlittensystemen gemeinsamen Führungsleisten 26 in Richtung der Z-Achse verschiebbar geführt, was im Bereich der beiden Kreuzschlittensysteme 30, 32 jeweils durch einen Doppelpfeil angedeutet wurde. Jeder der beiden Unterschlitten 34, 38 ist mit einer X-Führung 44 bzw. 46 versehen, die jeweils von zwei Führungsleisten 48 bzw. 49 gebildet wird, welche an der Oberseite des Unterschlittens 34 bzw. des Unterschlittens 38 fest angebracht sind und sich in einer Richtung senkrecht zur Z-Achse, d. h. senkrecht zur Spindelachse 18 erstrekken, nämlich in Richtung der sogenannten X-Achse. Die X-Führung 44 dient der Führung des Oberschlittens 36, die X-Führung 46 der Führung des Oberschlittens 40, so daß jeder dieser Oberschlitten bezüglich des ihn tragenden Unterschlittens 34 bzw. 38 in Richtung der X-Achse verschiebbar gehalten ist. Antriebe, mit denen sich der Unterschlitten 34 bzw. der Unterschlitten 38 in Richtung der Z-Achse und der Oberschlitten 36 bzw. der Oberschlitten 40 in Richtung der X-Achse gesteuert verschieben lassen, sind nicht dargestellt, da es sich bei diesen Antrieben um bekannte Aggregate von Werkzeugmaschinen handelt.

Am Oberschlitten 36 ist ein erster Werkzeugrevolver 50 angebracht, am Oberschlitten 40 ein zweiter Werkzeugrevolver 52. Auch diese Werkzeugrevolver sind in bekannter Weise ausgebildet und am zugehörigen Oberschlitten jeweils um eine zur Z-Achse parallele Achse (Schaltachse) drehbar und um diese Achse weiterschaltbar angebracht. Wie bekannt, kann ein solcher Werkzeugrevolver mit mehreren, unterschiedlichen Werkzeugen bestückt werden, von denen in Fig. 1 nur zwei Werkzeuge dargestellt wurden, nämlich die Werkzeuge 54 und 56.

Schließlich zeigt die Fig. 1 noch schematisch eine Steuerung 60 des CNC-Drehautomaten, bei der es sich um eine speicherprogrammierbare Steuerung handeln soll.

Soweit der Drehautomat vorstehend beschrieben wurde, entspricht er voll und ganz dem Stand der Technik, so daß es nicht erforderlich ist, weitere Einzelheiten zeichnerisch darzustellen und zu beschreiben.

Da verhindert werden muß, daß die beiden sich längs derselben Z-Führung 24 bewegenden Kreuzschlittensysteme 30 und 32 bzw. ihre einander zugewandten Werkzeugrevolver 50 und 52 im Zuge von Bewegungen in Richtung der Z-Achse kollidieren, die beiden Oberschlitten 36 und 40 relativ zu den sie tragenden Unterschlitten 34 und 38 jedoch nur Bewegungen in Richtung der X-Achse, d. h. senkrecht zur Z-Achse, durchführen, sind bei Anwendung der Erfindung auf Maschinenbauteile in Form von auf einer gemeinsamen Führung verfahrbaren Schlitten die Mittel zur Durchführung des erfindungsgemäßen Verfahrens an diesen Schlitten vorgesehen, bei dem in Fig. 1 dargestellten Drehautomaten also an den beiden Unterschlitten 34 und 38. Deshalb ist am Unterschlitten 34 ein erster Träger 100 für eine Reihe von in Richtung der Z-Achse aufeinanderfolgenden Markierungen befestigt, welch letztere die Form von Nocken N1, N2, N3, N4 und N5 haben, während am Unterschlitten 38 ein zweiter Träger 102 befestigt ist, welcher einen Sensor S zum Abtasten dieser Nocken hält; der Sensor S ist über eine Signalleitung 104 mit der Steuerung 60 verbunden und hat eine der Nockenreihe bzw. den Rücken der Nocken zugewandte Tastfläche 106, über die der Sensor S die Nocken N1 bis N5 berührungslos abtasten kann. Derartige Sensoren sind bekannt, z. B. in Form induktiver oder kapazitiver Näherungsschalter, mit denen sich die Nocken abtasten lassen, wenn letztere aus Metall bestehen oder mit einer Metallbeschichtung versehen sind. Erfindungsgemäß haben die Nocken N1 bis N5 eine rechteckige Form, wobei in Fig. 1 die dem zweiten Kreuzschlittensystem 32 zugewandten Flanken der Nocken N1 bis N5 mit F1 bis F5 bezeichnet wurden.

Es sei nun angenommen, daß sich der Unterschlitten 34 des ersten Kreuzschlittensystems 30 mit der Bahngeschwindigkeit V1 gemäß Fig. 1 von links nach rechts bewegt, d. h. auf das zweite Kreuzschlittensystem 32 zu, und daß sich der Unterschlitten 38 des zweiten Kreuzschlittensystems 32 mit der Bahngeschwindigkeit V2 gemäß Fig. 1 von rechts nach links bewegt, d. h. in Richtung auf das erste Kreuzschlittensystem 30, so daß sich die beiden Kreuzschlittensysteme mit der Geschwindigkeit V1 + V2 einander nähern. Solange der in Richtung der Z-Achse, d. h. in Richtung der Z-Führung 24, gemessene Abstand der beiden Kreuzschlittensysteme 30, 32 voneinander größer ist als in Fig. 1 dargestellt, d. h. solange der Sensor S den ersten Träger 100 noch nicht erreicht hat, besteht keine Kollisionsgefahr, jedenfalls unter der Annahme, daß der Träger 100 so lange bemessen und so am Unterschlitten 34 angebracht sowie der Sensor S bezüglich des Unterschlittens 38 so angeordnet ist, daß, wenn die in Richtung der Z-Achse wirksamen Antriebe für die beiden Unterschlitten 34, 38 abgeschaltet werden, die Summe der Bremswege der beiden Kreuzschlittensysteme 30, 32 in Richtung der Z-Achse auch bei maximalen Bahngeschwindigkeiten V1 und V2 der beiden Unterschlitten 34, 38 in Richtung der Z-Achse deutlich kleiner ist als der in Richtung der Z-Achse gemessene Abstand der beiden Werkzeugrevolver 50 und 52 voneinander (für alle Positionen der beiden Kreuzschlittensysteme relativ zueinander, in denen sich der Sensor S noch nicht im Bereich des Trägers 100 befindet).

Erfindungsgemäß sind nun die von den Nokken N1 bis N5 gebildeten Markierungen in Richtung der Z-Achse unterschiedlich lang gestaltet und/oder in unterschiedlich großen Abständen voneinander angeordnet, wobei die im Sinne einer Annäherung der beiden Kreuzschlittensysteme 30, 32 (in Richtung der Z-Achse) aufeinanderfolgenden Markierungen bzw. Nocken N1 bis N5 immer kürzer werden und/oder in immer kürzeren Abständen voneinander angeordnet sind. Dies bedeutet aber auch, daß bei einer Annäherung der beiden Kreuzschlittensysteme aneinander die in Richtung der Z-Achse aufeinanderfolgenden Flanken F1 bis F5 in immer kürzer werdenden Abständen voneinander angeordnet sind, eine Maßnahme, die für sich allein für die Durchführung des erfindungsgemäßen Verfahrens ausreichen würde, wie sich aus dem Folgenden noch ergeben wird.

Wenn sich nun die beiden Kreuzschlittensysteme 30, 32 in Richtung der Z-Achse einander annähern und der Sensor S die Markierungsreihe bzw. den Träger 100 erreicht hat, erzeugt der Sensor S bei der in Fig. 1 dargestellten Ausführungsform und dann, wenn die mit Hilfe des Sensors S erzeugte Impulsfolge von Impulsen gebildet wird, deren Länge der in Richtung der Z-Achse gemessenen Länge des jeweils überfahrenen Nockens N entspricht, eine Impulsfolge, deren aufeinanderfolgende Impulse immer kürzer werden und durch immer kürzere Zeitintervalle voneinander getrennt sind, wobei die Dauer der einzelnen Impulse und die Dauer der einzelnen, zwischen aufeinanderfolgenden Impulsen liegenden Zeitintervalle von der Relativgeschwindigkeit V1 + V2 der beiden Kreuzschlittensysteme 30, 32 relativ zueinander abhängen. Würden hingegen die Impulse der mit Hilfe der erfindungsgemäßen Einrichtung erzeugten Impulsfolge nur von den Flanken F1 bis F5 erzeugt werden, wären alle Impulse gleich lang, die Zeitintervalle zwischen aufeinanderfolgenden Impulsen würden jedoch immer kürzer werden. Während also im letztgenannten Fall erfindungsgemäß nur die Impulsfolgefrequenz eine Funktion des Abstandes der beiden Kreuzschlittensysteme voneinander sowie der Relativgeschwindigkeit V1 + V2 ist, ergibt sich im erstgenannten Fall erfindungsgemäß eine Impulsfolge, bei der sowohl die Dauer der einzelnen Impulse, als auch die Impulsfolgefrequenz eine Funktion des Abstandes der beiden Kreuzschlittensysteme voneinander sowie der Relativgeschwindigkeit V1 + V2 ist. Da die Vermeidung einer Kollision voraussetzt, daß im Zeitpunkt des Abschaltens des Antriebs eines Unterschlittens (wenn sich nur dieser Unterschlitten bewegt) bzw. des Abschaltens der beiden Antriebe für die beiden Unterschlitten der in Richtung der Z-Achse gemessene Abstand der beiden Kreuzschlittensysteme bzw. der beiden Werkzeugrevolver 50, 52 voneinander mindestens so groß ist wie der geschwindigkeitsabhängige Bremsweg des bewegten Unterschlittens bzw. die Summe der geschwindigkeitsabhängigen Bremswege der beiden Unterschlitten, kann der Antrieb bzw. können die Antriebe durch die Steuerung 60 rechtzeitig abgeschaltet werden, da die von der erfindungsgemäßen Einrichtung erzeugte Impulsfolge in jedem der beiden vorstehend beschriebenen Fälle eine Information darüber liefert, wann der Antrieb bzw. die Antriebe abgeschaltet werden muß bzw. abgeschaltet werden müssen, um unter Berücksichtigung der in Richtung der Z-Achse gemessenen Relativgeschwindigkeit der beiden Kreuzschlittensysteme relativ zueinander und damit des erforderlichen Bremswegs bzw. der Summe der erforderlichen Bremswege eine Kollision der beiden Kreuzschlittensysteme bzw. der beiden Werkzeugrevolver zu verhindern.

Besonders bevorzugt werden Ausführungsformen der erfindungsgemäßen Einrichtung, bei denen die Länge der Markierungen bzw. Nocken und/oder die Abstände zwischen aufeinanderfolgenden Markierungen bzw. Nocken und/oder die Abstände zwischen aufeinanderfolgenden Flanken F1 bis F5 der Nocken - bei Annäherung der beiden zu überwachenden Maschinenbauteile aneinander - harmonisch abnehmen (eine konstante Relativgeschwindigkeit der beiden Maschinenbauteile relativ zueinander vorausgesetzt).

Aus dem Vorstehenden ergibt sich im übrigen, daß an die Stelle des Abschaltens eines Antriebs auch ein Umschalten des Antriebs treten kann, d. h. eine Umkehr der Verfahrrichtung des Maschinenbauteils bzw. der Maschinenbauteile.

Wie bereits erwähnt, wird durch die erfindungsgemäße Einrichtung, wenn die beiden zu überwachenden Maschinenbauteile, bei der in Fig. 1 dargestellten Ausführungsform also die beiden Unterschlitten 34 und 38, aufeinander zufahren, eine Impulsfolge erzeugt, deren Impulsfolgefrequenz bei konstanter Relativgeschwindigkeit stetig zunimmt. Wenn nun eine Grenzfrequenz erreicht ist, die sich dann ergibt, wenn der Abstand der beiden zu überwachenden Maschinenbauteile voneinander nicht mehr ausreicht, um diese bei der gegebenen Relativgeschwindigkeit sicher bis zum Stillstand abzubremsen, ohne daß sich eine Kollision ergibt, muß von einer Kollisionsgefahr ausgegangen werden. Da die Impulsfolgefrequenz von der Relativgeschwindigkeit der beiden zu überwachenden Maschinenbauteile relativ zueinander und vom Abstand der beiden Maschinenbauteile voneinander abhängt, erlaubt es die Erfindung, den maximalen und noch sicheren Bewegungsbereich der beiden Maschinenbauteile relativ zueinander voll zu nutzen, da die erfindungsgemäße Kollisionsüberwachung erst reagiert, wenn der bzw. die für das Abbremsen aus der momentanen Relativgeschwindigkeit bis zum Stillstand erforderliche Bremsweg bzw. Summe der Bremswege gleich dem momentanen Abstand der beiden Maschinenbauteile voneinander oder geringfügig kleiner ist.

Technisch realisieren läßt sich die erfindungsgemäße Kollisionsüberwachung z. B. mit Hilfe einer in der Maschinensteuerung vorgesehenen monostabilen Kippstufe, die immer dann getriggert wird, wenn der Sensor einen Impuls erzeugt, und deren Selbsthaltezeit der für die Vermeidung einer Kollision zulässigen minimalen Periodendauer der Impulsfolgefrequenz entspricht. Erzeugt der Sensor nämlich einen Impuls, während sich die Kippstufe noch in Selbsthaltung befindet, bestünde ohne eine Reaktion der erfindungsgemäßen Kollisionsüberwachung die Gefahr einer Kollision der beiden zu überwachenden Maschinenbauteile.

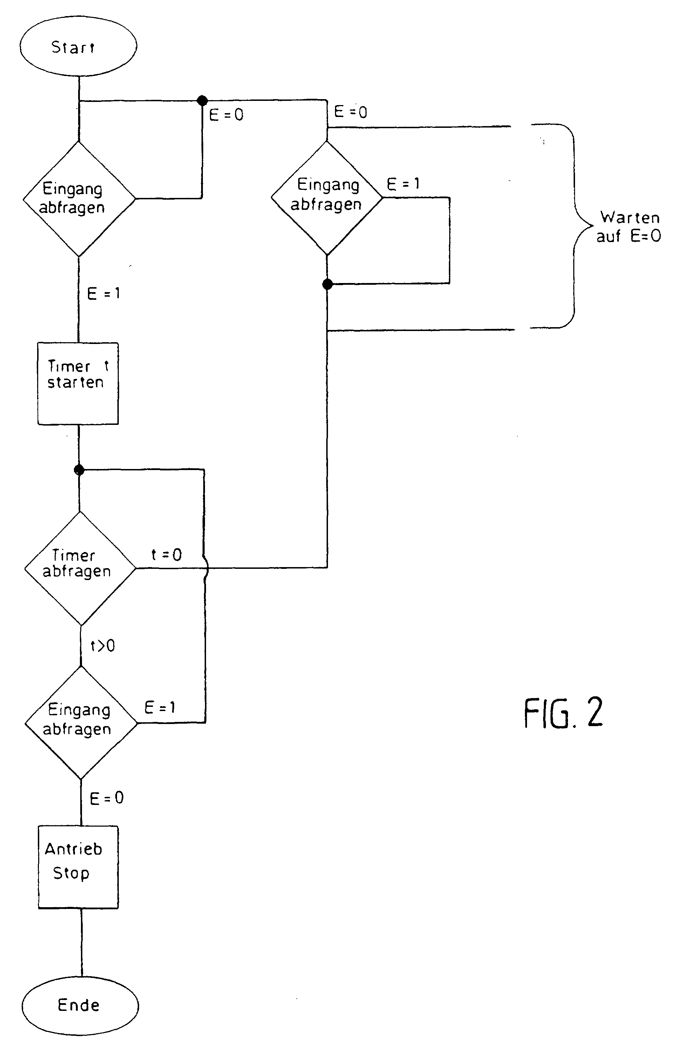

Anhand der Fig. 2 soll nun eine der durch die Einrichtung gemäß Fig. 1 möglichen technischen Realisationen der Erfindung näher erörtert werden. Bei der nun zu erörternden Ausführungsform soll der Sensor S eine Impulsfolge erzeugen, deren Impulse jeweils eine Impulsdauer besitzen, welche der Länge des impulserzeugenden Nockens entspricht; ferner soll die speicherprogrammierbare Steuerung 60 einen Timer (Zeitschaltglied) umfassen, welcher jeweils durch die vordere Flanke der Impulse gestartet wird und der eine solche Laufzeit besitzt, daß Kollisionsgefahr gegeben ist, wenn während der Laufzeit des Timers das vom Sensor S erzeugte Signal, durch das der Timer zuletzt gestartet wurde, verschwindet, weil dann der Sensor S zuletzt einen so kurzen Nocken mit einer so großen Geschwindigkeit überfährt, daß sich die beiden zu überwachenden Maschinenbauteile einander kollisionskritisch genähert haben.

Bei einer solchen Ausführungsform wird die gemäß dem erfindungsgemäßen Verfahren gestaltete Kollisionsüberwachung, wie in dem Ablaufschema nach Fig. 2 dargestellt, mit Hilfe der Steuerung 60 gestartet (siehe "Start" in Fig. 2), worauf der über die Signalleitung 104 mit dem Sensor S verbundene Eingang der Steuerung 60 abgefragt wird, ob an diesem Eingang ein Signal (Impuls) anliegt (E = 1) oder ob dies nicht der Fall ist (E = 0) - siehe den Schritt "Eingang abfragen" in Fig. 2. Hat im Falle des Aufeinanderzubewegens der beiden Kreuzschlittensysteme 30, 32 der Sensor S den Träger 100 noch nicht erreicht, ergibt die Abfrage des Eingangs das Ergebnis E = 0, worauf die Abfrage des Eingangs entsprechend dem Ablauftakt der Steuerung 60 wiederholt wird. Wenn der Sensor S den Träger 100 und damit den ersten Nocken N1 erreicht hat oder wenn der Sensor S einen der Nocken N2 bis N5 erreicht hat, führt die Abfrage des Eingangs zu dem Ergebnis E = 1, wodurch der Timer gestartet wird - siehe den Schritt "Timer starten" in Fig. 2. Dem Takt der Steuerung 60 entsprechend wird dann immer wieder geprüft (siehe "Timer abfragen" in Fig. 2), ob der Timer bereits abgelaufen ist; ist dies noch nicht der Fall, d. h. ist die Restlaufzeit t des Timers noch größer Null (t > 0), wird der Eingang erneut abgefragt (siehe "Eingang abfragen" in Fig. 2), was, wenn sich E = 1 ergibt, zu einer erneuten Abfrage des Timers führt. Endet der Impuls jedoch vor Ablauf des Timers, führt die Abfrage des Eingangs zu dem Ergebnis E = 0, worauf dann die Steuerung 60 den Antrieb bzw. die Antriebe abschaltet (siehe "Antrieb Stop" in Fig. 2), weil das Ergebnis der Abfrage des Eingangs anzeigt, daß ein zu kurzer Nocken mit zu großer Geschwindigkeit überfahren worden ist und infolgedessen bei weiterlaufendem Antrieb Kollisionsgefahr drohen würde. Der Verfahrensablauf ist damit an seinem Ende angelangt (siehe "Ende" in Fig. 2).

Läuft der Timer ab (t = 0), ehe das aufgrund des zuletzt abgetasteten Nockens am Eingang der Steuerung 60 erscheinende Signal verschwunden ist, wird zunächst durch erneute bzw. sich wiederholende Abfrage des Eingangs festgestellt, wann dieses Signal verschwindet (E = 0) - solange die Abfrage des Eingangs zu dem Ergebnis E = 1 führt, wird die Abfrage des Eingangs taktgemäß wiederholt -, und der ganze, vorstehend beschriebene Vorgang wiederholt sich so lange bzw. so oft, bis nach Starten des Timers die Abfrage des Eingangs zu dem Ergebnis E = 0 führt, solange der Timer noch läuft, d. h. dessen Restlaufzeit t größer Null ist.

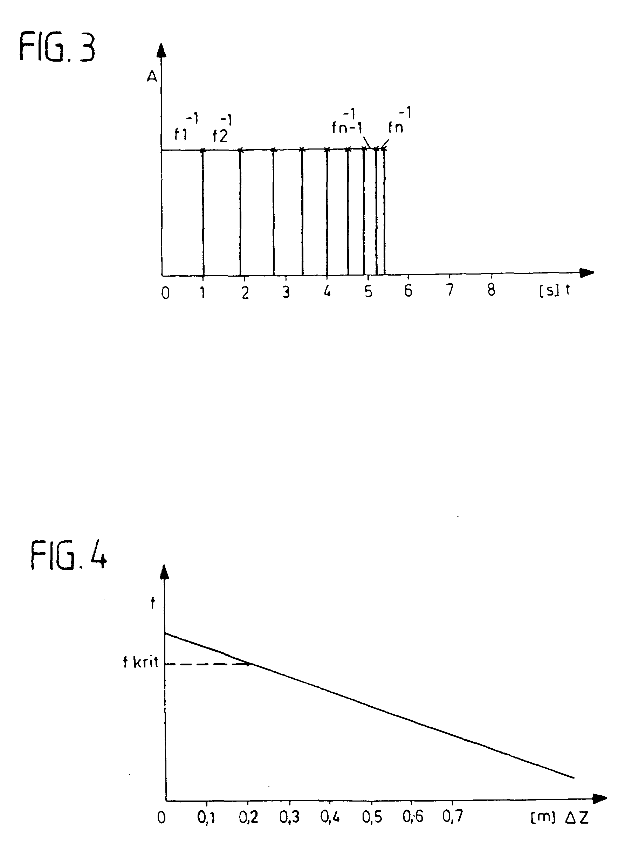

Die Figuren 3 und 4 beziehen sich auf die vorstehend geschilderte Alternative, bei der die mit Hilfe des Sensors erzeugte Impulsfolge von kurzen, nur den jeweils vorderen Flanken der Markierungen bzw. Nokken zuzuordnenden Impulsen gebildet wird. In Fig. 3 sind für den Fall aufeinander zufahrender Maschinenbauteile bzw. Schlitten die zeitlich aufeinanderfolgenden Impulse mit der Amplitude "A" über der Zeit "t" als Abszisse aufgetragen, wobei die Zeiteinheit eine Sekunde sein soll. Allerdings zeigt die Fig. 1 nur fünf Markierungen bzw. Nocken, so daß nur fünf Impulse erzeugt werden könnten, während die Fig. 3 für eine Einrichtung gilt, durch welche eine größere Anzahl von aufeinanderfolgenden Impulsen erzeugt werden kann. In Fig. 3 wurden die Zeitintervalle zwischen aufeinanderfolgenden Impulsen mit $f_1^{-1}$, $f_2^{-1}$ ... bis $f_n^{-1}$ bezeichnet, die Impulsfolgefrequenz f nimmt also stetig ab. Für die Fig. 3 sei nun angenommen, daß Kollisionsgefahr besteht, wenn die Impulsfolgefrequenz sich bis auf eine kritische Frequenz $f_{krit}$ erhöht hat, welche zwischen den Werten $f_{n-1}$ und $f_n$ liegt, so daß für die dem Eintreten einer Kollisionsgefahr entsprechende kritische Impulsfolgefrequenz gilt:

$$f_{n-1} < f_{krit} < f_n.$$

In der zur Fig. 3 gehörenden Fig. 4 ist die Impulsfolgefrequenz f als Funktion des Abstandes ΔZ (in Metern) zwischen den beiden zu überwachenden Maschinenbauteilen für den Fall aufgetragen, daß sich die beiden Maschinenbauteile mit einer vorgegebenen, konstanten Relativgeschwindigkeit einander annähern. Dann nimmt im Falle der in Fig. 3 dargestellten Impulsfolge die Impulsfolgefrequenz mit sich verkleinerndem Abstand linear zu, und bei einem Abstand von gemäß Fig. 4 beispielsweise 0,2 m wird die in Fig. 4 mit $f_{krit}$ bezeichnete kritische Impulsfolgefrequenz erreicht, bei deren Überschreitung eine Kollision eintreten würde.

Durch Auswertung der erfindungsgemäß erzeugten Impulsfolge kann auch ein Auseinanderfahren der beiden Maschinenbauteile überwacht werden, wenn dies erwünscht wird, obwohl in diesem Fall keine Kollisionsgefahr besteht, denn bei einem Auseinanderfahren der beiden Maschinenbauteile ergibt sich ein stetiges Absinken der Impulsfolgefrequenz.

Die größte und die kleinste Länge der Markierungen bzw. Nocken, die Grenzfrequenzen der Impulse und die zulässigen Geschwindigkeitsbereiche hängen vom Auflösungsvermögen des Sensors und der maximal möglichen Verarbeitungsgeschwindigkeit der Impulse in der Steuerung ab.

Wie sich aus dem Vorstehenden ergibt, bringt die Erfindung unter anderem die folgenden Vorteile mit sich: größtmöglicher Bewegungsbereich des überwachten Maschinenbauteils bzw. größtmögliche Bewegungsbereiche zweier bewegter und überwachter Maschinenbauteile, außerordentlich kostengünstige, da einfache Einrichtung zur Durchführung des erfindungsgemäßen Verfahrens, d. h. geringer Aufwand an Hardware, aber auch geringer Softwareaufwand, geringer Bedarf an Rechnerleistung in der Maschinensteuerung und hohe Funktionssicherheit durch physikalisch erzeugte Signale.

Aufgrund der vorstehenden Erläuterung der Erfindung wird verständlich, daß sich mit der Erfindung auch eine Kollision zwischen einem Maschinenschlitten und einem ortsfesten Maschinenbauteil verhindern läßt. Man stelle sich in diesem Zusammenhang vor, daß in Abwandlung der in Fig. 1 dargestellten Maschine auf der Z-Führung 24 nur das zweite Kreuzschlittensystem 32 geführt werde und die Z-Führung so angeordnet ist, daß dieses Kreuzschlittensystem bzw. der Werkzeugrevolver 52 mit dem Spindelkasten 10 und/oder der Arbeitsspindel 16 kollidieren könnte. Es wäre dann nur erforderlich, den Träger 100 in entsprechender Weise stationär anzubringen und den Träger 102 so am Unterschlitten 38 anzuordnen, daß sein Sensor S die am Träger 100 vorgesehene Markierungsreihe abtasten kann.

Wie sich bereits aus den vorstehenden Ausführungen ergibt, läßt sich die vorliegende Erfindung ohne weiteres auch auf Konstruktionen übertragen, bei denen wenigstens eines der beiden Maschinenbauteile nicht auf einer geraden Bahn verfahren wird, sondern längs einer z. B. kreisbogenförmigen Bahn, da es in einem solchen Fall nur erforderlich ist, dem Träger für die Markierungsreihe eine an die Bahnform angepaßte Form zu geben. Ebenso ergibt sich aus den vorstehenden Ausführungen, daß es sich bei dem angetriebenen Maschinenbauteil z. B. auch um ein solches handeln kann, welches durch den Antrieb um eine Achse gedreht wird, wie dies bei der Werkstückspindel-Trommel eines Mehrspindel-Drehautomaten der Fall ist - streng genommen bewegt sich dann natürlich nur ein Teil des angetriebenen Maschinenbauteils längs einer kreisförmigen Bahn.

**Patentansprüche**

1. Verfahren zur Überwachung der Bewegung mindestens eines ersten durch einen Antrieb längs einer vorgegebenen Bahn bewegten Maschinenbauteils (36) zur Vermeidung eines Überfahrens einer bezüglich eines zweiten Maschinenbauteils (38) zulässigen Endposition, wobei mittels den beiden Maschinenbauteilen zugeordneter Signalerzeugungsvorrichtungen (N1 - N5, S) bei einer Bewegung des ersten Bauteils (36) eine von dem in Bahnrichtung gemessenen Abstand des ersten Bauteils von der Endposition sowie der in Bahnrichtung gemessenen Relativgeschwindigkeit des ersten Bauteils relativ zur Endposition abhängige Folge von zur Steuerung des Antriebs verwendeten Signalen erzeugt wird, **dadurch gekennzeichnet, daß** mittels der Signalerzeugungsvorrichtungen (N1 - N5, S) eine Folge von Impulsen erzeugt wird, in der mindestens eine der Größen Abstand, Länge und Höhe aufeinanderfolgender Impulse einer Funktion der vorgenannten Relativgeschwindigkeit sowie des vorgenannten Abstandes des ersten Bauteils (36) folgt, und daß der Antrieb bezüglich der Vermeidung eines Überfahrens der zulässigen Endposition ausschließlich in Abhängigkeit von der Relation mindestens einer der vorgenannten Größen mehrerer unmittelbar aufeinanderfolgender Impulse zueinander derart gesteuert wird, daß der Antrieb erst beeinflußt wird, wenn aus der momentanen Relativgeschwindigkeit des ersten Bauteils heraus dessen maximaler Bremsweg gleich oder geringfügig kleiner ist als der momentane Abstand des ersten Bauteils von der genannten Endposition.

2. Verfahren nach Anspruch 1, **dadurch gekennzeichnet, daß** die Impulsfolge erst ab einem vorgegebenen Abstand des ersten Bauteils (36) von der Endposition erzeugt wird.

3. Verfahren nach Anspruch 1 oder 2 zur Verhinderung von durch Bewegen mindestens des ersten Maschinenbauteils (36) längs der Bahn möglichen Kollisionen zwischen den beiden Maschinenbauteilen (36, 38), **dadurch gekennzeichnet, daß** eine Impulsfolge erzeugt wird, bei der der Abstand und/oder die Länge und/oder die Höhe aufeinanderfolgender Impulse einer Funktion des in Bahnrichtung gemessenen Abstandes der beiden Bauteile (36, 38) voneinander sowie der in Bahnrichtung gemessenen Relativgeschwindigkeit der beiden Bauteile relativ zueinander folgt.

4. Einrichtung zur Überwachung der Bewegung mindestens eines ersten, durch einen Antrieb längs einer vorgegebenen Bahn bewegten Maschinenbauteils (36) zur Vermeidung eines Überfahrens einer bezüglich eines zweiten Maschinenbauteils (38) zulässigen Endposition, wobei der Endposition bzw. dem ersten Bauteil ein Träger (100) für eine Reihe von in Bahnrichtung aufeinanderfolgenden Markierungen (N1 - N5) und dem zweiten Bauteil bzw. der Endposition eine Sensorvorrichtung (S) zum Abtasten der Markierungsreihe und Erzeugen entsprechender Signale jeweils fest zugeordnet ist, und wobei eine mit der Sensorvorrichtung verbundene, den Antrieb steuernde, eine Auswerteschaltung für die Signal aufweisende Antriebssteuerung (60) vorgesehen ist, **gekennzeichnet durch** die Kombination folgender Merkmale:

(a) die Sensorvorrichtung (S) ist als ein die Reihe von Markierungen (N1 - N5) abtastender und dabei eine Folge von Impulsen erzeugender Sensor ausgebildet;

(b) die Markierungen (N1 - N5) sind derart ausgebildet, daß der Abstand ($f_1^{-1}$, $f_2^{-1}$ etc.) und/oder die Länge und/oder die Höhe aufeinanderfolgender Impulse einer Funktion des in Bahnrichtung gemessenen Abstandes des ersten Bauteils (36) von der Endposition sowie der in Bahnrichtung gemessenen Relativgeschwindigkeit des ersten Bauteils relativ zu der Endposition folgt;

(c) die Antriebssteuer (60) ist derart ausgebildet, daß der Antrieb ausschließlich in Abhängigkeit von der Relation mindestens einer der vorgenannten Größen - Abstand, Länge und Höhe aufeinanderfolgender Impulse - mehrerer unmittelbar aufeinanderfolgender Impulse zueinander derart gesteuert wird, daß der Antrieb erst beeinflußt wird, wenn aus der momentanen Relativgeschwindigkeit des ersten Bauteils (36) heraus dessen maximaler Bremsweg gleich oder nur geringfügig kleiner ist als der momentane Abstand des ersten Bauteils von der genannten Endposition.

5. Einrichtung nach Anspruch 4 zur Verhinderung von durch Bewegen mindestens des ersten Maschinenbauteils (36) längs der Bahn möglichen Kollisionen zwischen den beiden Maschinenbauteilen (36, 38), **dadurch gekennzeichnet, daß** das eine Bauteil (36) mit dem Träger (100) und das andere Bauteil (38) mit dem Sensor (S) versehen ist und die Markierungen (N1 - N5) derart ausgebildet sind, daß der Abstand ($f_1^{-1}$, $f_2^{-1}$ etc.) und/oder die Länge und/oder die Höhe aufeinanderfolgender Impulse einer Funktion des in Bahnrichtung gemessenen Abstandes der beiden Bauteile (36, 50 bzw. 38, 52) voneinander sowie der in Bahnrichtung gemessenen Relativgeschwindigkeit der beiden Bauteile relativ zueinander folgt und so der Antrieb bei Erreichen eines bezüglich der Relativgeschwindigkeit kollisionskritischen Abstandes zwischen den beiden Bauteilen abschaltbar ist.

6. Einrichtung nach Anspruch 4 oder 5, **dadurch gekennzeichnet, daß** die in Bahnrichtung gemessenen Abstände zwischen aufeinanderfolgenden Markierungen (N1, N2 etc.) in Richtung einer Verkleinerung des zu überwachenden Abstandes kleiner werden.

7. Einrichtung nach einem oder mehreren der Ansprüche 4 bis 6, **dadurch gekennzeichnet, daß** die in Bahnrichtung gemessene Länge der Markierungen (N1, N2 etc.) in Richtung einer Verkleinerung des zu überwachenden Abstandes kleiner wird.

8. Einrichtung nach einem oder mehreren der Ansprüche 4 bis 7, **dadurch gekennzeichnet, daß** der Sensor (S) ein berührungslos betätigbarer Taster ist.

9. Einrichtung nach einem oder mehreren der Ansprüche 5 bis 8, **dadurch gekennzeichnet, daß** die beiden Bauteile (36, 38) als durch gesonderte Antriebe auf einer gemeinsamen Führung (24) verfahrbare Schlitten ausgebildet sind.

10. Einrichtung nach Anspruch 9, **dadurch gekennzeichnet, daß** die beiden Bauteile Werkzeugträger-Schlitten (36, 38) einer Werkzeugmaschine sind.

11. Einrichtung nach einem oder mehreren der Ansprüche 6 bis 10, **dadurch gekennzeichnet, daß** die Auswerteschaltung (60) derart ausgebildet ist, daß der Antrieb abschaltbar ist, wenn nach Erfassung eines Impulses durch die Auswerteschaltung innerhalb eines vorgegebenen Zeitintervalls die Auswerteschaltung einen weiteren Impuls erfaßt.

12. Einrichtung nach einem oder mehreren der Ansprüche 7 bis 10, **dadurch gekennzeichnet, daß** die Auswerteschaltung (60) derart ausgebildet ist, daß der Antrieb abschaltbar ist, wenn die Dauer eines von der Auswerteschaltung erfaßten Impulses kürzer ist als eine vorgegebene Zeitdauer.

13. Einrichtung nach einem oder mehreren der Ansprüche 4 bis 12, **dadurch gekennzeichnet, daß** der Träger (100) für die Markierungen (N1, N2 etc.) bezüglich des einen Maschinenbauteils (36) und der Sensor (S) bezüglich des anderen Maschinenbauteils (38) so angeordnet sind, daß die Markierungen durch den Sensor abtastbar sind, ehe der kritische Abstand erreicht ist.

14. Einrichtung nach den Ansprüchen 5 und 13, **dadurch gekennzeichnet, daß** der Träger (100) für die Markierungen (N1, N2 etc.) und/oder ein Träger (102) für den Sensor (S) derart ausgebildet und am zugeordneten Maschinenbauteil (36, 38) angeordnet ist bzw. sind, daß mindestens einer (100) der beiden Träger (100, 102) in Bahnrichtung und in Richtung auf das jeweils andere Maschinenbauteil über das ihm zugeordnete Maschinenbauteil vorsteht und die beiden Träger (100, 102) samt Markierungen (N1, N2 etc.) und Sensor (S) bei Annäherung der beiden Maschinenbauteile aneinander nicht kollidieren.

**Claims**

1. Process for monitoring the movement of at least a first machine component (36) moved by a drive along a predetermined path for avoidance of any overtravelling of an end position admissible in relation to a second machine component (38), wherein a sequence of signals used for controlling the drive is generated during a movement of the first component (36) by means of signal generating devices (N1 - N5, S) associated with the two machine components, the sequence of signals being dependent upon the distance of the first component from the end position, measured in path direction, and upon the relative speed of the first component in relation to the end position, measured in path direction, **characterized in that** a sequence of pulses wherein at least one of the quantities distance, length and height of successive pulses follows a function of the aforementioned relative speed and of the aforementioned distance of the first component (36) is generated by means of the signal generating devices (N1 - N5, S), and in that regarding avoidance of any overtravelling of the admissible end position the drive is controlled solely in dependence upon the relation of at least one of the aforementioned quantities of several directly successive pulses to one another such that the drive is only influenced when on the basis of the instantaneous relative speed of the first component, its maximum brake path is equal to or slightly smaller than the instantaneous distance of the first component from the aforementioned end position.

2. Process as defined in claim 1, **characterized in that** the sequence of pulses is only generated from a predetermined distance of the first component (36) from the end position onwards.

3. Process as defined in claim 1 or 2 for preventing collisions between the two machine components (36, 38) which are possible owing to movement of at least the first machine component (36) along the path, **characterized in that** a sequence of pulses wherein the distance and/or the length and/or the height of successive pulses follows a function of the distance of the two components (36, 38) from one another, measured in path direction, and of the relative speed of the two components in relation to one another, measured in path direction, is generated.

4. Apparatus for monitoring the movement of at least a first machine component (36) moved by a drive along a predetermined path for avoidance of any overtravelling of an end position admissible in relation to a second machine component (38), wherein a support (100) for a series of markings (N1 - N5) following one another in path direction is fixedly associated with the end position or the first component and a sensor device (S) for scanning the series of markings and for generating corresponding signals is fixedly associated with the second component or the end position, and wherein a drive control (60) connected to the sensor device, controlling the drive and comprising an evaluation circuit for the signals is provided, **characterized by** the combination of the following features:

   (a) the sensor device (S) is designed as a sensor which scans the series of markings (N1 - N5) and generates a sequence of pulses;

   (b) the markings (N1 - N5) are designed such that the distance ($f_1^{-1}$, $f_2^{-1}$ etc.) and/or the length and/or the height of successive pulses follows a function of the distance of the first component (36) from the end position, measured in path direction, and of the relative speed of the first component in relation to the end position, measured in path direction;

   (c) the drive control (60) is designed such that the drive is controlled solely in dependence upon the relation of at least one of the aforementioned quantities - distance, length and height of successive pulses - of several directly successive pulses to one another such that the drive is only influenced when on the basis of the instantaneous relative speed of the first component (36), its maximum brake path is equal to or only slightly smaller than the instantaneous distance of the first component from the aforementioned end position.

5. Apparatus as defined in claim 4 for preventing collisions between the two machine components (36, 38) which are possible owing to movement of at least the first machine component (36) along the path, **characterized in that** the one component (36) is provided with the support (100) and the other component (38) with the sensor (S), and the markings (N1 - N5) are designed such that the distance ($f_1^{-1}$, $f_2^{-1}$ etc.) and/or the length and/or the height of successive pulses follows a function of the distance of the two components (36, 50 and 38, 52, respectively) from one another, measured in path direction, and of the relative speed of the two components in relation to one another, measured in path direction, and so the drive is adapted to be switched off when a collision-critical distance between the two components in relation to the relative speed is reached.

6. Apparatus as defined in claim 4 or 5, **characterized in that** the distances between successive markings (N1, N2 etc.) measured in path direction become smaller in the direction of a decrease in the distance to be monitored.

7. Apparatus as defined in any one or several of claims 4 to 6, **characterized in that** the length of the markings (N1, N2 etc.) measured in path direction becomes smaller in the direction of a decrease in the distance to be monitored.

8. Apparatus as defined in any one or several of claims 4 to 7, **characterized in that** the sensor (S) is a scanning means actuatable in a non-contacting manner.

9. Apparatus as defined in any one or several of claims 5 to 8, **characterized in that** the two components (36, 38) are designed as slides displaceable by separate drives on a common guideway (24).

10. Apparatus as defined in claim 9, **characterized in that** the two components are tool carrier slides (36, 38) of a machine tool.

11. Apparatus as defined in any one or several of claims 6 to 10, **characterized in that** the evaluation circuit (60) is designed such that the drive is adapted to be switched off when after detection of a pulse by the evaluation circuit the evaluation circuit detects a further pulse within a predetermined time interval.

12. Apparatus as defined in any one or several of claims 7 to 10, **characterized in that** the evaluation circuit (60) is designed such that the drive is adapted to be switched off when the duration of a pulse detected by the evaluation circuit is shorter than a predetermined period of time.

13. Apparatus as defined in any one or several of claims 4 to 12, **characterized in that** the support (100) for the markings (N1, N2 etc.) is arranged in relation to the one machine component (36) and the sensor (S) is arranged in relation to the other machine component (38) such that the markings are adapted to be scanned by the sensor before the critical distance is reached.

14. Apparatus as defined in claims 5 and 13, **characterized in that** the support (100) for the markings (N1, N2 etc.) and/or a support (102) for the sensor (S) is or are designed and arranged on the associated machine component (36, 38) such that at least one (100) of the two supports (100, 102) projects beyond the machine component associated with it in path direction and in a direction towards the respective other machine component, and the two supports (100, 102) together with markings (N1, N2 etc.) and sensor (S) do not collide when the two machine components approach one another.

## Revendications

1. Procédé pour surveiller le déplacement d'au moins une première pièce de machine (36) déplacée par un entraînement le long d'une voie prédéterminée, pour éviter de dépasser une position finale admissible par rapport à une deuxième pièce de machine (38), dans lequel on produit, au moyen de dispositifs de production de signaux (N1- N5, S) associés aux deux pièces de machine, lors d'un déplacement de la première pièce (36), une succession de signaux, utilisés pour la commande de l'entraînement, en dépendance de la distance, mesurée dans la direction de la voie, entre la première pièce et la position finale, ainsi que de la vitesse relative, mesurée dans la direction de la voie, de la première pièce par rapport à la position finale, **caractérisé en ce que** l'on produit au moyen des dispositifs de production de signaux (N1 - N5, S), une succession d'impulsions dans laquelle l'un au moins des paramètres que sont la distance, la longueur et la hauteur d'impulsions successives suit une fonction de la vitesse relative précitée ainsi que de la distance précitée de la première pièce (36), et en ce que l'entraînement est commandé, pour éviter de dépasser la position finale admissible, exclusivement en dépendance de la relation mutuelle de l'un au moins des paramètres précités de plusieurs impulsions qui se suivent immédiatement, de telle manière que l'entraînement est influencé uniquement lorsque le trajet de freinage maximum de la première pièce, calculé à partir de sa vitesse relative momentanée, est égal ou légèrement inférieur à la distance momentanée de la première pièce depuis la position finale précitée.

2. Procédé selon la revendication 1, **caractérisé en ce que** la succession d'impulsions est produite uniquement à partir d'une distance prédéterminée entre la première pièce (36) et la position finale.

3. Procédé selon l'une ou l'autre des revendications 1 et 2, destiné à empêcher des collisions éventuelles entre les deux pièces de machine (36, 38) par déplacement de la première pièce de machine au moins (36) le long de la voie, **caractérisé en ce que** l'on produit une succession d'impulsions dans laquelle la distance et/ou la longueur et/ou la hauteur d'impulsions qui se suivent mutuellement suit une fonction de la distance, mesurée dans la direction de la voie, des deux pièces (36, 38) l'une par rapport à l'autre, ainsi que de la vitesse relative, mesurée dans la direction de la voie, des deux pièces l'une par rapport à l'autre.

4. Dispositif pour surveiller le déplacement d'au moins une première pièce de machine (36) déplacée par un entraînement le long d'une voie prédéterminée, pour éviter de dépasser une position finale admissible par rapport à une deuxième pièce de machine (38), dans lequel on associe fermement à la position finale, ou respectivement à la première pièce, un support (100) pour une série de marquages (N1-N5) qui se suivent mutuellement dans la direction de la voie, et l'on associe fermement à la deuxième pièce, ou respectivement à la position finale, un dispositif détecteur (S) pour palper la série de marquages et pour produire des signaux correspondants, et dans lequel est prévue une unité de commande d'entraînement (60) reliée au dispositif détecteur, commandant l'entraînement, et comprenant un circuit d'évaluation pour le signal, **caractérisé par** la combinaison des caractéristiques suivantes :

(a) le dispositif détecteur (S) est réalisé sous la forme d'un capteur qui palpe la série de marquages (N1-N5) et produit ici une succession d'impulsions ;
(b) les marquages (N1-N5) sont réalisés de telle manière que la distance ($f_1^{-1}$, $f_2^{-1}$, etc.) et/ou la longueur et/ou la hauteur d'impulsions qui se suivent mutuellement suit une fonction de la distance, mesurée dans la direction de la voie, entre la première pièce (36) et la position finale, ainsi que de la vitesse relative, mesurée dans la direction de la voie, de la première pièce par rapport à la position finale ;
(c) l'unité de commande d'entraînement (60) est réalisée de telle manière que l'entraînement est commandé exclusivement en dépendance de la relation d'au moins l'un des paramètres précités, que sont la distance, la longueur et la hauteur d'impulsions qui se suivent mutuellement, de plusieurs impulsions qui se suivent immédiatement, de telle façon que l'entraînement est influencé uniquement lorsque le trajet de freinage maximum de la première pièce (36), calculé à partir de la vitesse relative momentanée de celle-ci, est égal ou légèrement inférieur à la distance momentanée de la première pièce depuis la position finale précitée.

5. Dispositif selon la revendication 4, pour empêcher des collisions éventuelles entre les deux pièces de machine (36, 38) par déplacement de la première pièce de machine (36) au moins le long de la voie, **caractérisé en ce que** l'une des pièces (36) est pourvue du support (100) et l'autre pièce (38) est pourvue du capteur (S), en ce que les marquages (N1-N5) sont ainsi réalisés que la distance ($f_1^{-1}$, $f_2^{-1}$, etc.) et/ou la longueur et/la hauteur d'impulsions qui se suivent suit une fonction de la distance, mesurée dans la direction de la voie, entre les deux pièces (36, 50 ; 38, 52) l'une par rapport à l'autre, ainsi que de la vitesse relative, mesurée dans la direction de la voie, des deux pièces l'une par rapport à l'autre, et en ce que l'entraînement peut être ainsi coupé lorsqu'on atteint entre les deux pièces une distance qui présente un caractère critique en termes de collision par rapport à la vitesse relative.

6. Dispositif selon l'une ou l'autre des revendications 4 et 5, **caractérisé en ce que** les distances, mesurées dans la direction de la voie, entre des marquages (N1, N2, etc.) qui se suivent, deviennent plus petites dans le sens d'une diminution de la distance à surveiller.

7. Dispositif selon l'une ou plusieurs des revendications 4 à 6, **caractérisé en ce que** la longueur des marquages (N1, N2, etc.), mesurée dans la direction de la voie, devient plus petite dans le sens d'une diminution de la distance à surveiller.

8. Dispositif selon l'une ou plusieurs des revendications 4 à 7, **caractérisé en ce que** le capteur (S) est un capteur à fonctionnement sans contact.

9. Dispositif selon l'une ou plusieurs des revendications 5 à 8, **caractérisé en ce que** les deux pièces (36, 38) sont réalisées sous forme de chariots déplaçables par des entraînements particuliers sur un guide commun (24).

10. Dispositif selon la revendication 9, **caractérisé en ce que** les deux pièces sont des chariots porte-outils (36, 38) d'une machine-outil.

11. Dispositif selon l'une ou plusieurs des revendications 6 à 10, **caractérisé en ce que** le circuit d'évaluation (60) est ainsi réalisé que l'entraînement peut être coupé lorsque, après détection d'une impulsion par le circuit d'évaluation, le circuit d'évaluation reçoit une autre impulsion à l'intérieur d'un intervalle temporel prédéterminé.

12. Dispositif selon l'une ou plusieurs des revendications 7 à 10, **caractérisé en ce que** le circuit d'évaluation (60) est ainsi réalisé que l'entraînement peut être coupé lorsque la durée d'une impulsion détectée par le circuit d'évaluation est plus courte qu'une durée prédéterminée.

**13.** Dispositif selon l'une ou plusieurs des revendications 4 à 12, **caractérisé en ce que** le support (100) pour les marquages (N1, N2, etc.) est ainsi agencé par rapport à l'une des pièces de machine (36) et le capteur (S) est ainsi agencé par rapport à l'autre pièce de machine (38) que les marquages peuvent être palpés par le capteur avant d'atteindre la distance critique.

**14.** Dispositif selon les revendications 5 et 13, **caractérisé en ce que** le support (100) pour les marquages (N1, N2, etc.) et/ou un support (102) pour le détecteur (S) est(sont) ainsi réalisé(s) et ainsi agencé(s) sur la pièce de machine associée (36, 38), que l'un au moins (100) des deux supports (100, 102) dépasse dans la direction de la voie et en direction de l'autre pièce de machine au-delà de la pièce de machine qui lui est associée, et ce que les deux supports (100, 102), conjointement avec les marquages (N1, N2, etc.) et avec le capteur (S), ne viennent pas en collision l'un avec l'autre lors du rapprochement des deux pièces de machine.

FIG.1

EP 0 716 362 B1

FIG. 2

FIG. 3

FIG. 4